Europäisches Patentamt

European Patent Office

Office européen des brevets

(19)

(11) Veröffentlichungsnummer: **0 126 278**
**B1**

(12) **EUROPÄISCHE PATENTSCHRIFT**

(45) Veröffentlichungstag der Patentschrift:
14.01.87

(21) Anmeldenummer: 84104143.7

(22) Anmeldetag: 12.04.84

(51) Int. Cl.⁴: **A 01 D 85/00,** A 01 D 59/00,
A 01 F 15/00

(54) **Ballen aus Stroh oder Heu.**

(30) Priorität: 22.04.83 DE 8311900 U

(43) Veröffentlichungstag der Anmeldung:
28.11.84 Patentblatt 84/48

(45) Bekanntmachung des Hinweises auf die Patenterteilung:
14.01.87 Patentblatt 87/3

(84) Benannte Vertragsstaaten:
DE FR GB NL SE

(56) Entgegenhaltungen:
EP-A-0 012 684
DE-B-2 705 101
DE-U-8 311 900
US-A-4 173 112

(73) Patentinhaber: Polydress Plastic GmbH,
Rossbacher Weg 5, D-6120 Michelstadt/Odenwald
(DE)

(72) Erfinder: Fritz, Ulrich, Dr., Lustgartenstrasse 2,
D-6120 Erbach/Odenwald (DE)
Erfinder: Kelz, Rony, Adolf- Kredel- Strasse 12,
D-6120 Michelstadt/Odenwald (DE)

(74) Vertreter: Möbus, Rudolf, Dipl.- Ing.,
Hindenburgstrasse 65, D-7410 Reutlingen (DE)

**Beschreibung**

Die Erfindung betrifft einen zylindrischen Ballen, der aus mindestens einer Preßlage aus Stroh, Heu oder Gras gewickelt und auf seiner Mantelfläche von einem Hüllstreifen umfangen ist, dessen Enden sich überlappen.

Zylindrische Wickelballen der vorstehend genannten Art ersetzen immer mehr die quaderförmigen Ballen, in welche Stroh oder Heu in Mähdreschern oder gesonderten Vorrichtungen bisher gepreßt worden sind. Ein Wickelballen mit den vorstehend genannten Merkmalen ist durch die US-A-41 73 112 bekannt. Der Hüllstreifen besteht dort aus Kunststoffolie, wasserfestem Papier oder Stoff. Das Anfangsende des Hüllstreifens wird zwischen der äußeren und der nach innen angrenzenden nächsten Wickelschicht des Ballengutes gehalten, und das überlappende Abschlußende des Hüllstreifens wird durch Festkleben am überlappten Hüllstreifenbereich gegen ein Lösen gesichert.

Eine Ummantelung mittels einer wasserdichten Folie hat zwar den Vorteil, daß der zylindrische Ballen auf seiner Mantelfläche gegen das Eindringen von Feuchtigkeit, insbesondere Regenwasser, geschützt ist. Dieser Vorteil ist jedoch begrenzt, da von den Stirnseiten der Wickelballen her Feuchtigkeit eindringen kann und das Ballengut Feuchtigkeit aufsaugen kann. Außerdem besteht der Nachteil, daß im Ballengut befindliche Feuchtigkeit auf der Mantelfläche der Wickelballen nicht austreten kann, ein Trocknen des Ballengutes also behindert wird. Eine geschlossene Ummantelung der Wickelballen fördert somit die Fäulnisbildung im Ballengut. Ein weiterer Nachteil besteht darin, daß viel Hüllmaterial erforderlich ist und das Abschlußende der Umhüllung festgeklebt werden muß. Dadurch ergeben sich relativ hohe Materialkosten, und die Einrichtung zum Umhüllen der zylindrischen Ballen wird relativ aufwendig.

Der Erfindung liegt die Aufgabe zugrunde, einen zylindrischen Ballen der eingangs genannten Art mit geringem Einrichtungsaufwand so zu ummanteln, daß er in seiner Form ohne in seine Oberfläche einschneidendes Wickelgarn gehalten wird und seine Oberfläche gegen Ausfransen geschützt ist, ohne daß dabei seine Außenfläche dem trocknenden Einfluß der Umgebungsluft entzogen wird.

Die gestellte Aufgabe wird bei den genannten Ballen erfindungsgemäß dadurch gelöst, daß der Hüllstreifen aus einem Netzstreifen besteht, dessen Enden sich mindestens über ein Drittel des Ballenumfanges überlappen und durch in die Netzöffnungen eingreifendes Ballengut in Überlappungslage gehalten sind. Der Netzstreifen kann vorteilhafterweise aus einem aus verstreckten Kunststoff-Folienbändchen gefertigten Raschelgewirk bestehen, das eine relativ große Maschenweite haben kann. Das Netz verfängt sich auf seiner ganzen Anlagefläche, einschließlich dem Überlappungsbereich seiner Endabschnitte, in der rauhen Außenseite des Wickelballens, wodurch eine Selbsthaltung des aufgewickelten Netzstreifens entsteht, die ein Sichern des Netzstreifens durch Umwickeln mit Bindegarn oder durch ein besonderes Verbinden seiner Endabschnitte völlig überflüssig macht. Die Maschenweite des Netzes kann so gewählt werden, daß es Tieren, wie Kühen, Schafen, Ziegen, praktisch unmöglich ist, Kunststoff-Folienbändchen Heu oder Stroh herauszuzupfen.

Die Anbringung des Netzstreifens oder mehrerer Netzstreifen auf dem Ballen läßt sich wesentlich rascher bewerkstelligen als ein mehrmaliges Umwickeln des Ballens mit Bindegarn. Durch diese Zeitersparnis bei der Sicherung des gewickelten Ballens wird der durch die Netzstreifen bedingte größere Materialaufwand weitaus ausgeglichen. Es tritt sogar eine merkliche Einsparung pro Ballen auf.

Aus verstreckten Kunststoff-Folienbändchen raschelgewirkte Netzstreifen sind sehr reißfest und auch dehnungsfähig. Zum Öffnen des Ballens läßt sich das Netz durch einen Schnitt mit einem Messer auftrennen und dann mit Sicherheit vollständig entfernen, so daß das Vieh nicht durch Netzstreifenreste gefährdet ist.

Es hat sich bei der Verwendung mehrerer Netzstreifen an einem Ballen oder bei einer nur teilweisen Abdeckung der Ballenaußenseite durch einen Netzstreifen als vorteilhaft erwiesen, am Netzstreifen Randmarkierungen zur optischen Kontrolle seiner Lage auf dem Ballen anzubringen. Hierbei kann zweckmäßig mindestens ein Außenrand des Netzstreifens aus einem dunkleren Material, beispielsweise Folienbändchenmaterial, als der übrige Netzstreifen hergestellt sein. Die Außenränder können aber auch in einer auffallenden Farbe gehalten sein, um den Kontrollzweck zu erfüllen.

Nachfolgend wird ein Ausführungsbeispiel eines erfindungsgemäß ausgebildeten zylindrischen Ballens anhand der beiliegenden Zeichnung näher erläutert.

Es zeigen:

Fig. 1 eine Ansicht des Ballens in Richtung seiner Wickelachse;

Fig. 2 eine Seitenansicht des Ballens senkrecht zu seiner Wickelachse.

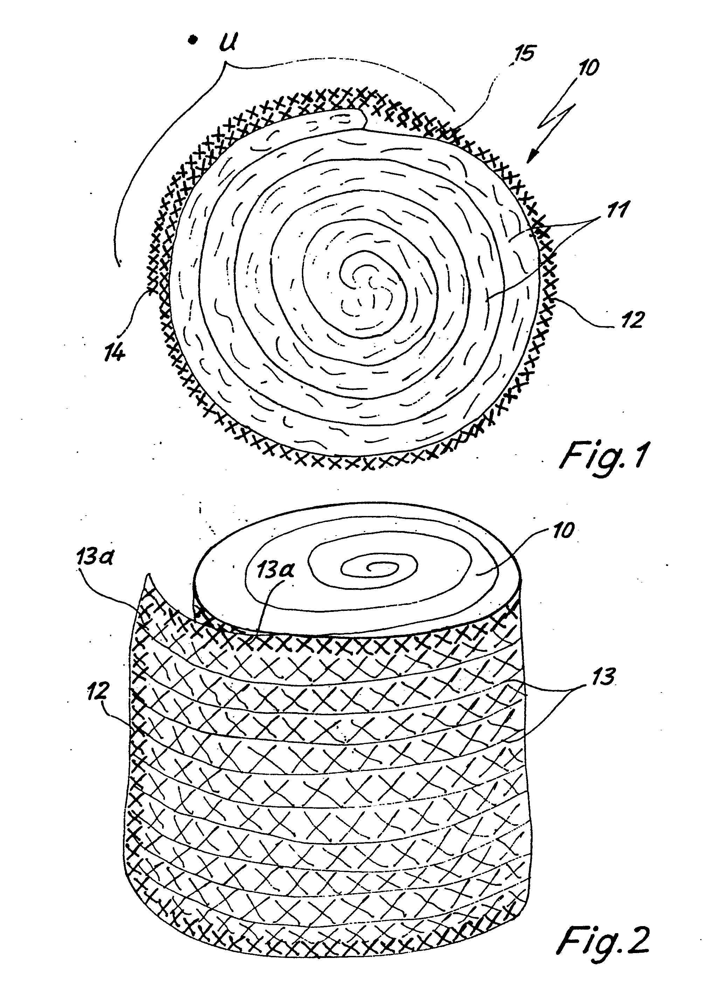

Fig. 1 zeigt die einzelnen Wickellagen 11 eines zylindrischen Ballens 10, der beispielsweise aus dem Stroh gedroschener Getreidehalme besteht. Der Ballen ist von einem in Fig. 1 durch Kreuze gekennzeichneten Netzstreifen 12 umfangen, der beim dargestellten Ausführungsbeispiel die ganze Breite oder Höhe des Außenmantels des Ballens 10 bedeckt. Die Länge des Netzstreifens 12 ist so gewählt, daß sich seine Endbereiche über einen relativ großen Umfangsbereich U, der mindestens ein Drittel des Ballenumfanges beträgt, überlappen. Der Netzstreifen 12 ist ein aus verstreckten Kunststoff-Folienbändchen 13 gefertigtes Raschelgewirk, wie in Fig. 2 angedeutet ist. Das Kunststoffmaterial ist dehnbares Niederdruckpolyäthylen.

Zur Kontrolle des ordnungsgemäßen Sitzes und einer sauberen Überlappung der Endbereiche des Netzstreifens 12 ist der Netzstreifen 12 an seinen Endrändern 14 und 15 und auch an seinen beiden Längsrändern mit einer gut sichtbaren Randmarkierung versehen. Beim dargestellten Ausführungsbeispiel ist hierzu der Rand des Raschelgewirks mit Folienbändchen 13a von auffallender Farbe gewirkt.

Durch die von der Oberfläche der außenliegenden Wickellagen 11 des Ballens 10 abstehenden Halmenden, die durch die Maschenöffnungen des Netzstreifens hindurchragen, wird der gesamte Netzstreifen 12, einschließlich des überlappenden Endbereiches, sicher an der Oberfläche des Wickelballens 10 gehalten, so daß keine besonderen Maßnahmen zur Sicherung des Netzstreifens 12 auf dem Ballen 10 erforderlich sind.

## Patentansprüche

1. Zylindrischer Ballen, der aus mindestens einer Preßlage aus Stroh, Heu oder Gras gewickelt und auf seiner Mantelfläche von einem Hüllstreifen umfangen ist, dessen Enden sich überlappen, dadurch gekennzeichnet, daß der Hüllstreifen aus einem Netzstreifen (12) besteht, dessen Enden sich mindestens über ein Drittel des Ballenumfanges überlappen und durch in die Netzöffnungen eingreifendes Ballengut in Überlappungslage gehalten sind.

2. Ballen nach Anspruch 1, dadurch gekennzeichnet, daß der Netzstreifen (12) aus einem aus verstreckten Kunststoff-Folienbändchen (13, 13') gefertigten Raschelgewirk besteht.

3. Ballen nach Anspruch 1 und 2, dadurch gekennzeichnet, daß der Netzstreifen (12) aus dehnbaren Niederdruckpolyäthylen-Folienstreifen (13, 13') gebildet ist.

4. Ballen nach einem der Ansprüche 1 bis 3, dadurch gekennzeichnet, daß der Netzstreifen (12) Randmarkierungen zur optischen Kontrolle seiner Lage auf dem Ballen aufweist.

5. Ballen nach Anspruch 4, dadurch gekennzeichnet, daß zur Randmarkierung mindestens ein Außenrand des Netzstreifens (12) aus dunklerem Textilmaterial, beispielsweise Folienbändchenmaterial, als der übrige Netzstreifen hergestellt ist.

## Claims

1. A cylindrical bale which is wound from at least one compressed layer of straw, hay or grass and is encompassed on its outer surface by an enveloping strip the ends of which overlap, characterised in that the enveloping strip consists of a netting strip (12) the ends of which overlap at least over one third of the circumference of the bale and are held in the overlapping position by bale material engaging into the netting openings.

2. A bale according to claim 1, characterised in that the netting strip (12) consists of a Raschel knitted fabric made from stretched plastics foil ribbons (13, 13').

3. A bale according to claim 1 and 2, characterised in that the netting strip (12) is formed from extensible low-pressure polyethylene foil strips (13, 13').

4. A bale according to one of claims 1 to 3, characterised in that the netting strip (12) has edge markings for the optical checking of its position on the bale.

5. A bale according to claim 4, characterised in that for the edge marking at least one outer edge of the netting strip (12) is produced from darker textile material, for example foil ribbon material, than the remaining netting strip.

## Revendications

1. Balle cylindrique, enroulée en au moins une couche comprimée de paille, de foin ou d'herbe et encourée sur son aire latérale d'une bande enveloppante dont les extrémités se superposent, caractérisée en ce que la bande enveloppante est constituée d'une bande en filet (12) dont les extrémités se superposent sur un tiers au moins de la circonférence de la balle et sont maintenues en position de superposition par les produits contenus dans la balle et qui pénètrent dans les mailles du filet.

2. Balle conforme à la revendication 1, caractérisée en ce que la bande en filet (12) est en tissu mailles Rachel constitué de bandelettes de film en matière plastique étirée (13, 13').

3. Balle conforme aux revendications 1 et 2, caractérisée en ce que la bande en filet (12) est constituée de bandes en film de polyéthylène basse pression extensible (13, 13,).

4. Balle conforme à l'une quelconque des revendications 1 à 3, caractérisée en ce que la bande en filet (12) comporte des marquages en bordure pour le contrôle visuel de sa position sur la balle.

5. Balle conforme à la revendication 4, caractérisée en ce que, pour le marquage en bordure, un bord extérieur au moins de la bande en filet (12) est fabriqué en matériau textile plus foncé que le reste de la bande en filet, par exemple en un matériau formant une bandelette de film.

*Fig.1*

*Fig.2*